# EUROPEAN PATENT APPLICATION

(11) **EP 4 002 061 A1**
(43) Date of publication of application: **25.05.2022**
(21) Application number: 20209425.6
(22) Date of filing: 24.11.2020
(51) Int. Cl.: G06F 1/3212, G06F 3/16, G10L 15/22

(54) **A CONTROL DEVICE AND A METHOD FOR DETERMINING CONTROL DATA BASED ON AUDIO INPUT DATA**

(71) Applicant: Inter IKEA Systems B.V., 2616 LN Delft (NL)
(72) Inventor: Elofsson, Rasmus, 269 93 Båstad (SE); Nilsson, Fredrik, 283 33 Osby (SE)
(74) Representative: Ström & Gulliksson AB

(57) **Abstract**

A control device (100) comprises an audio data receiver (102), a data communications module (104), a controller (108), and a power supply control module (116). A first operation mode (112) comprises identification of a pre-set activation sound in the audio input data, and a second operation mode (114) comprises speech recognition for identifying user intentions for generating control data. A main module (128) is configured to determine if in the internal or external power supply mode (120, 124), to instruct the audio processing module (110) to operate in the first operation mode (112) if in the internal power supply mode (120), or in the second operation mode (114) if in the external power supply mode (124). When the control device (100) is in the first operation mode (112), if a control mode switch criteria is met, the audio processing module (110) is instructed to change to the second operation mode (114).

## Description

### Technical Field

The invention relates to a virtual assistant, such as a smart loudspeaker. More particularly, it is related to a control device and a method for determining control data based on audio input data.

### Background Art

Voice control devices, such as Alexa^{™} marketed by Amazon Inc., are today an integral part of everyday life of consumers worldwide. These devices may be used for controlling music, for reminding users of upcoming calendar events, for answering to questions posed by the users, etc. Even though the devices may come in different shapes, the devices are often shaped as a smart loudspeaker, i.e. a loudspeaker with built-in microphones and data processing capabilities.

Despite many advantages with the voice control devices of today, there are disadvantages, which make some users hesitating or even refusing to use these. One such disadvantage is perceived intrusion in private life, or in some cases actual intrusion. Most often this problem relates to that the devices are recording conversations held at home that are not intended to be heard by others. In addition to recording, the captured conversations can be sent to a server for storage and further processing. When in the server, these conversations may be accessed by staff during a long period of time. This problem is recognized and different measures have been made to mitigate this. One such measure is using so-called wake words, also referred to as activation words, to trigger capturing of audio input data and transmission of this to a cloud server. In this way, by restricting the audio data that is transmitted to the cloud server, a risk of transmitting audio input data related to private conversations can be reduced.

A side effect of using pre-determined wake words, such as "Hey smart loudspeaker", for triggering the audio control devices to capture the audio input data is that a user interface becomes less intuitive and requires a high cognitive effort. For instance, in case the users are not informed, or forget, the wake words the devices cannot be triggered, and as an effect the devices cannot respond to requests made by the users. Put differently, some solutions available today for reducing personal integrity issues may result in that the user interface becomes less intuitive for the users.

Even though the voice control devices are commonly used today and different measures have been made to reduce the risk of compromised personal integrity, this is still an issue and there is room for improvement when it comes to how to meet the two requirements - secured personal integrity and intuitive user interface.

### Summary

It is an object of the invention to at least partly overcome one or more of the above-identified limitations of the prior art. In particular, it is an object to provide a control device for generating control data based on audio input data that is intuitive without compromising on personal integrity of the user.

According to a first aspect it is provided a control device comprising
an audio data receiver (configured to receive audio input data,
a data communications module configured to communicate with external and/or internal units,
a controller comprising
an audio data processing module configured to process the audio input data according to a first operation mode or a second operation mode, wherein the first operation mode comprises identification of a pre-set activation sound in the audio input data, and the second operation mode comprises speech recognition for identifying, in the audio input data, user intentions for generating control data for controlling one or more of the external and/or internal units,
a power supply control module configured to power the control device via a battery in an internal power supply mode or via an external power source in an external power supply mode,
a main module configured:
to determine if the power supply control device is set in the internal power supply mode or the external power supply mode,
to instruct the audio processing module to operate in the first operation mode if the power supply control device is set in the internal power supply mode, or in the second operation mode if the power supply control device is set in the external power supply mode,
when the control device is in the first operation mode, if one or more control mode switch criteria are met, to instruct the audio processing module to change to the second operation mode, wherein the one or more control mode switch criteria comprises that the pre-set activation sound is identified in the input audio data.

An advantage with having different approaches linked to the internal power supply mode and the external power supply mode is that it can be clear to the user that when the control device is powered externally, e.g. by being placed on a charging mat or using a wired connection to the mains power supply, speech recognition is activated without any triggering needed, while in the internal power supply mode, triggering in the form of the activation sound is needed to activate the speech recognition.

The one or more control mode switch criteria may be a single criterion, such as that the pre-set activation sound is identified, e.g. "Hey IKEA", or a combination of several criteria, such as that the pre-set activation sound is identified in combination with another criterion, such as that a button on the control device is pushed down. Another option, herein exemplified with the control device provided with the button, is that several single criteria are available as different alternatives. In this example, switching from the first mode to the second mode may be triggered by that that the pre-set activation sound is identified as a first alternative or that the button is pushed as a second alternative. Put differently, if at least one criterion from the one or more control mode switch criteria are met, such as the identification of the pre-set activation sound or the button push, the switch from the first to the second control mode is done.

The external power source may be a charging mat arranged to power the control device via wireless power transmission.

Using the charging mat provides for that when the control device is placed in a specific location, e.g. on top of a table, the speech recognition is activated, otherwise not. This is intuitive and easy to grasp for most persons. Moreover, by using a charging mat, the control device is easily movable to and from being connected to the external power source.

The pre-set activation sound may be a pre-set activation word. The term pre-set activation word may comprise one or a plurality of words, such as "Hey", "Hey IKEA", "IKEA", "IKEA listen", "Listen", "Ingvar", "Vakna", etc.,. The activation word(s) may be in any language. The language may be a user preference, for example the activation word may be "Wake up IKEA" in English, and "Vakna IKEA" in Swedish.

The control device may further comprise
a motion detector arranged to detect if the control device is in an under movement mode or in a standing still mode,
wherein the main module is further configured to, when the control device is in the first operation mode:
to identify a movement mode of the control device, wherein the movement mode is the under movement mode or the standing still mode,
wherein the control mode switch criteria comprises that the under movement mode is identified.

An advantage with this is that the speech recognition can be activated when the control device is being moved. This is intuitve and provides a clear understanding to the user when speech is registered and when not. The meeting the control mode swich criteria may comprise that the pre-set activation sound is identified only or that that the under movement mode is identified only or that both are identified. Put differently, the user's intention to use the device can be indicated by sound, e.g. saying the pre-set activation sound, or by moving the device.

The control device may further comprise
a contact sensor arranged to detect that if a hand of a user is placed on the control device,
wherein the main module is further configured to, when the control device is in the first operation mode:
to identify a user contact mode of the voice control device, wherein the user contact mode is a detected user contact mode or a non-detected user contact mode,
wherein the control mode switch criteria comprises that the detected user contact mode is identified.

By having the contact sensor, it can be clear to the user that the speech recognition is activated when a finger or hand is placed on the control device. This is an intuitive way of activating speech recognition since users have been known to e.g. hold a device near his/hers mouth when talking to it. In line with the description above, identication of the detected user contact mode may in itself trigger the speech recognition, but it is also a possibility to apply a combination of identification of the activation sound, identification of the under movement mode and/or identification of the detected user contact mode.

The control device may further comprise
a button arranged on the control device,
wherein the main module is further configured, when the voice control device is in the first operation mode:
to identify a button mode of the voice control device, wherein the button mode is a button push mode or a non-button push mode, and
wherein the control mode switch criteria comprises that the button push mode is identified.

As for the contact sensor and the motion detector, by having the button it can be possible to provide a clear and intuitive user interface, and the user will not be left in doubt whether or not the control device is registering speech.

The control device may further comprise two different types of microphones:
a first type microphone configured to identify the pre-set activation sound when the control device is set in the first operation mode, and
a second type microphone configured to be in an inactivated mode when the control device is set in the first operation mode and in an activated mode when the control device is set in the second operational mode,
wherein the first type microphone in combination with the second type microphone in the activated mode are used for the speech recognition in the second operation mode.

By having these two different types of microphones, a more energy efficient control device can be achieved. In this embodiment, at least parts of the audio processing made in the first operation mode is performed in the first type microphone. The audio processing module may further be configured, when the control device is in the second operation mode, to generate control data to a speaker to provide speech feedback based on the identified user intentions and:
to identify a user type based on a combination of sentiment and voice effort in the audio input data, wherein the sentiment is a combination of voice amplitude, voice frequency and/or words used, and the voice effort is a combination of voice amplitude and/or voice frequency,
to adapt the control data to the speaker such that the speech feedback is adapted in terms of voice amplitude, voice frequency and/or words used based on the user type identified.

An advantage with adapting the speech recognition in this way is that the speech feedback can be adapted in an improved manner. For instance, if using the control device during night hours, the user may when whispering instructions to the control device receive the speech feedback from the control device in the form of a whispering. Put differently, a need for changing settings of the speech feedback can be omitted and a more user intuitive device can be provided.

A further advantage is that by adapting the speech feedback the control device becomes more likable for the user.

The speech recognition of the second operation mode may be limited to words and/or expressions in the field of home environment control, such as light control, blind control, sound control and air purifier control.

An advantage with restricting the speech recognition to a particular field like home environment control is that speech not related to this field can be left out, which provides for that less data is to be processed by the control device. Further, by having this particular field, it may be possible to have different key words that are required, e.g. "blind", "blinds", "air", "air purifier", "purifier" and "air cleaner". Further, by leaving out speech in this way, a risk of compromising the personal integrity of the user can be reduced.

According to a second aspect it is provided a method for determining control data in a control device, said method comprising
receiving audio input data,
determining if the voice control device is in an external power supply mode or in an internal power supply mode,
if the voice control device is in the external power supply mode,
identifying user intentions by processing the audio input data using speech recognition according to a second operation mode, and
if the user intentions are identified,
   determining the control data based on the user intentions identified,
if the voice control device is in the internal power supply mode,
scanning for a pre-set activation sound in the audio input data according to a first operation mode,
if the activation sound is identified,
   identifying user intentions by processing the audio input data using the speech recognition according to the second operation mode,
   if the user intentions are identified,
      determining the control data based on the user intentions identified.

The same advantages as presented above with respect to the first aspect also applies to this second aspect.

The method may further comprise
scanning for a movement of the control device if the control device is in the internal power supply mode by using a motion detector in the control device,
wherein the step of identifying user intentions by processing the audio input data using speech recognition is performed if the control device is in an under movement mode.

The method may further comprise
scanning for a detected user contact by using a contact sensor in the control device,
wherein the step of identifying user intentions by processing the audio input data using speech recognition is performed if the control device is in a detected user contact mode.

The method may further comprise
scanning for a button push by using a button in the control device,
wherein the step of identifying user intentions by processing the audio input data using speech recognition is performed if the control device is in a button push mode.

The speech recognition of the second operation mode may be limited to words and/or expressions in the field of home environment control, such as light control, blind control, sound control and air purifier control.

According to a third aspect it is provided a non-transitory computer-readable storage medium having stored thereon program code portions for implementing the method according to the first aspect when executed on a device having processing capabilities.

The same advantages as presented above with respect to the first aspect also applies to this third aspect.

Still other objectives, features, aspects and advantages of the invention will appear from the following detailed description as well as from the drawings.

### Brief Description of the Drawings

Embodiments of the invention will now be described, by way of example, with reference to the accompanying schematic drawings, in which
Fig. 1 generally illustrates a control device.
Fig. 2 is a flow chart of a method for determining control data in the control device.
Fig. 3A illustrates a first example of use of the control device.
Fig. 3B illustrates a second example of use of the control device.
Fig. 4 illustrates a third example of use of the control device.
Fig. 5 illustrates a fourth example of use of the control device.

### Detailed description

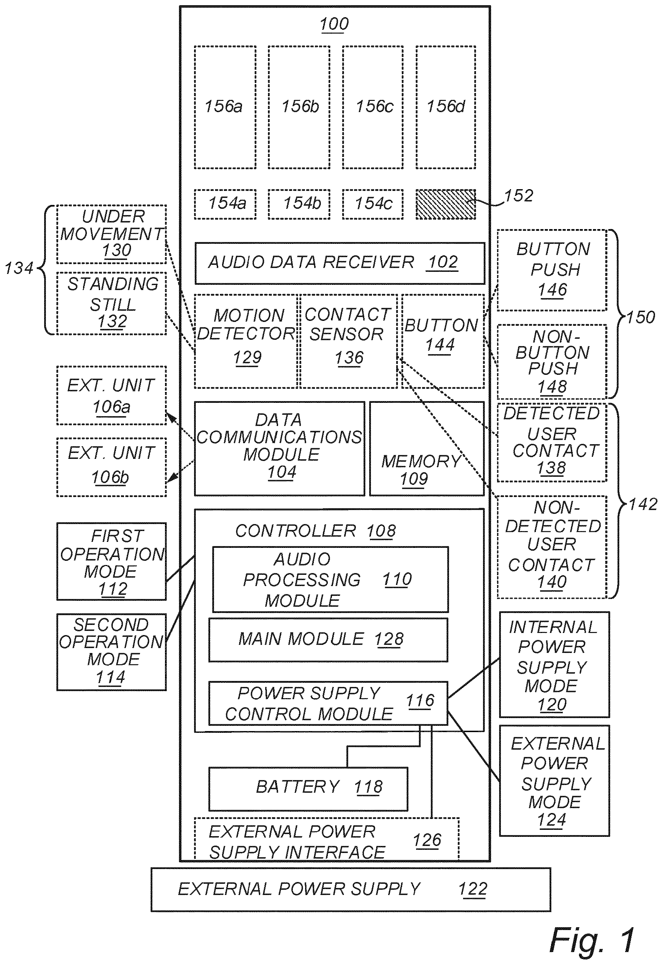

Fig. 1 generally illustrates a control device 100 that can be used for controlling a home environment. For instance, the control device 100 can be used for roll up or roll down blinds, to turn on or turn off lights, to turn on, adjust or turn off an air purifier etc. provided that the blinds, the air purifier and the lights are configured to receive control data and be adjusted accordingly.

The control device 100 may be a voice control device configured to receive audio input data in the form of speech, but the audio input data can also be more general and include other types of sounds, e.g. a finger snap sound and a hand clap sound. In addition, the audio input data may be a combination of different sounds.

To receive the audio input data, an audio data receiver 102 can be used. The audio data input may be captured by external and/or internal microphones. A data communications module 104 can be provided to enable communication with external units 106a, 106b. Examples of such external units 106, 106b are blinds, air purifiers, sound systems, TVs, blinds and other home environment devices. A controller 108, which may be any data processing device, in combination with a memory 109 can be used for determining the control data based on the audio input data. More particularly, the controller 108 may comprise an audio processing module 110 configured to process the audio input data according to a first operation mode 112 or a second operation mode 114. The first operation mode 112 can comprise identification of a pre-set activation sound, and the second operation mode 114 can comprise speech recognition for identifying user intentions and based on these intentions generate the control data that can be transmitted to the internal and/or external units 106a, 106b. As explained above, the external units may be lights, blinds etc. with which the control device can communicate. The internal units may also be lights, blinds, air purifiers etc. For instance, the control device 100 can be comprised within a lamp base and in such solution the light of the lamp can be considered to be the internal unit.

Even though illustrated as a separate unit, the audio data receiver 102 may form part of the data communications module 104 or a combination of the controller 108 and the data communications module 104. The controller 108 and the data communications module 104 may also form one and the same unit.

The control device 100 can further comprise a power supply control module 116. This can be configured to power the control device via a battery 118 in an internal power supply mode 120 and via an external power supply 122 in an external power supply mode 124. The external power supply 122 may be a charging mat or any other device that can power the control device 100. An advantage with having the charging mat is that wireless power transmission is made possible, which provides a convenient solution for a user. The concept of charging mat should be construed broadly in this context. For instance, the charging mat may be made of different materials and may be flexible as well as rigid. Further, the charging mat may be a stand-alone device or it may be integrated in other devices, e.g. a piece of furniture.

In case the charging mat or similar device that enables wireless power transmission is used, the control device 100 may be provided with an external power supply interface 126. As illustrated, the external power supply interface 126 may be provided in a bottom of the control device 100, but other embodiments are also possible.

In a main module 128 of the controller 100, it can be determined if the power supply control module 116 is in the internal power supply mode 120, i.e. powered by the battery 118, or in the external power supply mode 124, i.e. powered by the external power supply 122. In case the power supply control module 116 is in the internal power supply mode 120, the main module 128 can instruct the audio processing module 110 to operate in the first operation mode 112, e.g. scanning for the pre-set activation sound, and in case the power supply control module 116 is in the external power supply mode 124 the main module 128 can instruct the audio processing module 110 to operate in the second operation mode 114, e.g. using speech recognition to identify user intentions in the audio input data. When the control device 100 is in the first operation mode 112, if a control mode switch criteria is met, e.g. having identified the pre-set activation word, the main module 128 can instruct the audio processing module 110 to change to the second operation mode 114. For instance, in case the control device 100 is powered by the battery 118, and the pre-set activation sound is identified, the main module 128 may initiate the speech recognition of the second operation mode 114 such that the user intentions can be identified and in turn the control data be generated. The audio processing module 110, the main module 128 and the power supply module 116 may be software modules, hardware modules or a combination thereof.

By this approach, an energy efficient solution can be provided. When having restricted power, e.g. using the battery 118, a less power consuming listening mode, i.e. the internal power supply mode 120, can be used, and when not having restricted power, e.g. powered via the external power supply, a more power consuming listening mode, i.e. the external power supply mode 124, can be used.

Further, as an effect of having these two different possibilities of powering the control device 100, it can be become clear to the user which listening mode that is used. More particularly, if the control device 100 is externally powered, the user is aware that speech recognition is ongoing, while when the control device 100 is internally powered, the pre-set activation word can be required for starting the speech recognition. Thus, in addition to providing energy smartness, it is made possible for the user to easily and intuitively understand when the control device 100 is listening continuously and when continuous listening must be triggered, i.e. improved personal integrity control can be provided. The device may further indicate to a user which mode it is currently operating in using e.g. lights, a display or sound for informing the user.

In addition, time restrictions and space restrictions may be used, e.g. the control device 100 may be switched off during night time if placed in a bed room, but being operational day and night time if placed in a kitchen. Further, LEDs or similar may be provided on the control device to provide information to the user of which powering mode that is used, e.g. internal power supply mode 120 or external power supply mode 124.

The pre-set activation sound may be an activation word or an activation phrase, such as "Hey IKEA", but as described above it may also be a sound, such as a hand clap. Further, it may be a combination of words and non-words. Several different activation words may also be used.

The speech recognition may be performed inside the control device 100 to assure that the personal integrity is not compromised. However, to improve the speech recognition a cloud solution can be used, i.e. the speech recognition can be performed outside the control device 100. In this way, information from other control devices can be used for improving the speech recognition by e.g. using artificial intelligence (Al) or machine learning (ML). It is further possible to use a hybrid between the two approaches in which part of the speech recognition is made in the control device 100 and part of the speech recognition is made in the cloud solution. There are different examples on how such hybrid can be used. According to a first example, in case the audio input data cannot be processed appropriately in the control device 100, the audio input data may transfer the audio input data to the cloud solution in which more advanced speech recognition and data processing capabilities may be available. Before transmitting the audio input data, the control device may ask the user to confirm that this is acceptable by e.g. asking the user to push the button if it is acceptable that the audio input data is transmitted to the cloud solution, or to say "OK" or similar.

According to a second example, the control device may be able transcribe the audio input data to text, but the control device may not be able to identify the user intentions in the text. In such a case, the control device may transmit the text to the cloud solution for further processing. In case the cloud solution can identify the user intentions, these may be transmitted back to the control device. As in the first example, the user may be asked to confirm that involving the cloud solution is acceptable before transmitting the text.

The cloud solution may also, in a third example, provide the control device with external data. For instance, if the user is saying "lower the blinds if the outside temperature is above 20 degrees C", the control device may request the cloud solution to provide the outside temperature. Also in this example, the user may be asked to confirm that sharing information with the cloud solution is acceptable.

In order to provide for that the control device 100 switches from the first operation mode 112 to the second operation mode 114, identification of the pre-set activation sound may be combined with another trigger signal. Such trigger signal may be that it is detected that the control device 100 is moved. This may be achieved by having a motion detector 129 in the control device 100. The motion detector 100 can be any type of device or devices suitable for detecting movement, e.g. an accelerometer. The motion detector 129 can, in the first operation mode 112, be configured to detect if the control device 100 is in an under movement mode 130 or in a standing still mode 132, i.e. a movement mode 134 of the control device 100 can be detected. The control mode switch criteria may comprise that the under movement mode 130 is detected. Put differently, in addition to that the pre-set activation sound is identified it may be set as a condition that the control device 100 is moved. An advantage with this approach is that a risk that the user may trigger a switch to the second operation mode 114 unintentionally is lowered. Thus, having the motion detector 129 in the control device 100 additional possibilities to adapt settings related to personal integrity can be improved.

Another option can be that the control mode switch criteria is either that the activation sound is identified or that the under movement mode is identified. Put differently, instead of using both requirements, the speech recognition can be triggered based on the activation sound when being in the standing still mode, or the speech recognition may be triggered when the under movement mode is identified even though the activation sound is not identified.

In a similar manner, a contact sensor 136 may be placed in the control device 100. Instead of detecting movement of the control device 100, the contact sensor 136, which may be a capacitive sensor, can be configured to identify a detected user contact mode 138, e.g. if the user has placed his hand on the control device 100, or a non-detected user contact mode 140, e.g. that the user has not placed his hand on the device, i.e. a user contact mode 142 of the control device 100. The control mode switch criteria may include that the detected user contact mode 138 is identified. In other words, to switch from the first operation mode 112 to the second operation mode 114 it may be required that the contact sensor 136 has detected that the user has placed his or her hand on the control device 100. In line with the motion detector 129, the contact sensor 136 can provide for a user interface that is intuitive and does not leave the user in doubt about which of the operation modes that is being used. The control switch criteria may comprise both requirements of that the under movement mode 130 and the detected user contact mode 138 are identified.

Still an option is that the control mode switch criteria only requires that one of the requirements are fulfilled for triggering the speech recognition. In other words, it is sufficient that only the activation sound is identified or that the under movement mode is identified or that the detected user contact mode is identified. A further option is to require that two of these three conditions are met.

Further, a button 144 may be placed on the control device 100. The button 144 may be arranged to detect a button push mode 146 or a non-button push mode 148, i.e. a button mode 150 of the control device 100 may be identified. The control switch criteria may comprise that the button push mode 146 is identified. It is further possible to require that the button push mode 146 and the detected user contact mode 138 and/or the under movement mode 130 are identified, i.e. the four requirements may be combined in various ways.

The audio input data may be captured by one or several microphones placed outside the control device and/or by one or several microphones placed in the control device 100. If using internal microphones, i.e. microphones placed in the control device 100, two different types of microphones may be used. A first type microphone 152 may be used both in the first and second operation mode 112, 114. In the first operation mode 112, the first type microphone 152 may be set to operate in a low power mode, and in the second operation mode 114, the first type microphone 152 may be set to operate in a high power mode. As the names suggest, the lower power mode may be more energy efficient than the high power mode. To reduce energy need, in the low power mode, the audio input data may be captured at a lower sampling frequency and/or parts of sound capturing elements in the first type microphone 152 may be deactivated. In the low power mode, the first type microphone 152 may form part of the identification of the pre-set activation sound, and in the high power mode it may form part of the speech recognition. In addition to the first type microphone 152, one or several second type microphones 154a, 154b, 154c can be used. These microphones may be deactivated in the first operation mode 112, that is, they are not involved in capturing the audio input data used for identification of the pre-set activation sound. By having these deactivated, energy efficiency of the control device 100 can be improved. Once the control device 100 enters the second operation mode 114, the second type microphones 154a, 154b, 154c can be activated and form part of capturing the audio input data used for speech recognition. The second type microphones 154a, 154b, 154c may be activated by the first type microphone 152 directly once the pre-set activation sound is identified. Alternatively, in case the first type microphone 152 is not equipped to identify the activation sound on its own, the second type microphones 154a, 154b, 154c can be activated by the controller 108.

As described above, even though not illustrated in fig. 1, the audio processing module 110 may not only be part of the controller 108, but also the first type microphone 152. By way of example, data processing of the audio input data for identifying the pre-set activation sound may be performed in the first type microphone 152.

The control device 100 may further comprise the internal loudspeaker elements 156a-d. These may be used for providing audio feedback to the user, e.g. the speech feedback, but also for other purposes, e.g. playing music.

The audio processing module 110 may further be configured to identify a user type based on a combination of sentiment and voice effort. The sentiment may be a combination of voice amplitude, voice frequency and/or words used, and the voice effort may be a combination of voice amplitude and/or voice frequency. Once having identified the user type, which may be e.g. angry kid, the speech recognition can be adapted in terms of voice amplitude, voice frequency and words used. The audio feedback may also be adapted. For instance, a whispering person may be provided with the audio feedback in the form of a whispering.

To facilitate for the speech recognition, the user intentions may be restricted to the field of home environment control. Put differently, user intentions not related to home environment control, such as light control or air purifier control, may be disregarded. By restricting application to a particular field, the speech recognition can consider less options, which may improve e.g. response time. In case the speech recognition is triggered, but no user intentions are identified, the control device may return to the first operation mode after a pre-determined period of time.

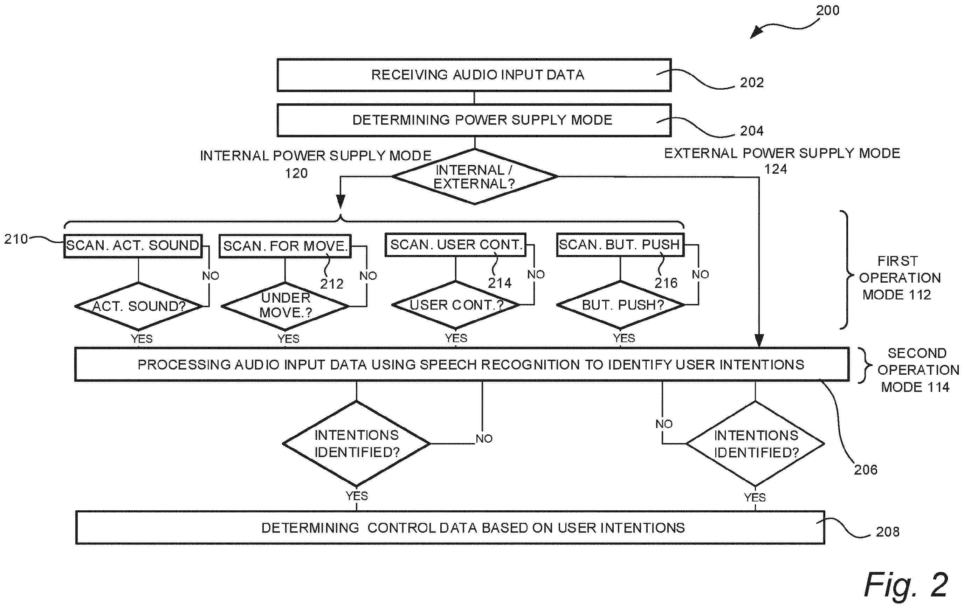

In fig. 2, a flow chart illustrating a method 200 for determining the control data in the control device 100 is provided. In a first step 202, the audio input data can be received. In a second step 204, the power supply mode can be determined. In case the control device is in the external power supply mode 124, in a third step 206, the audio input data can be processed using the speech recognition according to the second operation mode 114. In case the user intentions are identified, in a fourth step 208, the control data can be determined based on the user intentions. In other words, if the control device 100 is externally powered, the speech recognition can be applied without any trigger action.

On the other hand, in case the control device 100 is in the internal power supply mode 120, an activation of the speech recognition can be required. As described above, this may be made, in a fifth step 210, by scanning for the pre-set activation sound. In case the pre-set activation sound is identified, the speech recognition according to the third step 206 can be initiated.

In addition, or as an alternative, to identifying the pre-set activation sound, it may be required that a movement of the control device 100 is identified for the control device 100 to activate the speech recognition when in the internal power supply mode 120. This may be achieved by, in a sixth step 212, scanning for a movement. In case the under movement mode 130 is identified, the speech recognition can be activated.

In a similar manner, in a seventh step 214, scanning for a user contact may be performed. In case the detected user contact mode 138 is identified, the speech recognition can be activated. This may be combined with the fifth step 210 and/or the sixth step 212, that is, it may be required that a combination of events are identified to activate the speech recognition.

In an eighth step 216, scanning for a button push mode 146 may take place. In case the button push mode 146 is identified, the speech recognition can be activated. As for the fifth, sixth and seventh steps 210, 212, 214, this step may be made on its own or in combination with any of the other steps, i.e. the fifth, sixth and/or seventh step 210, 212, 214.

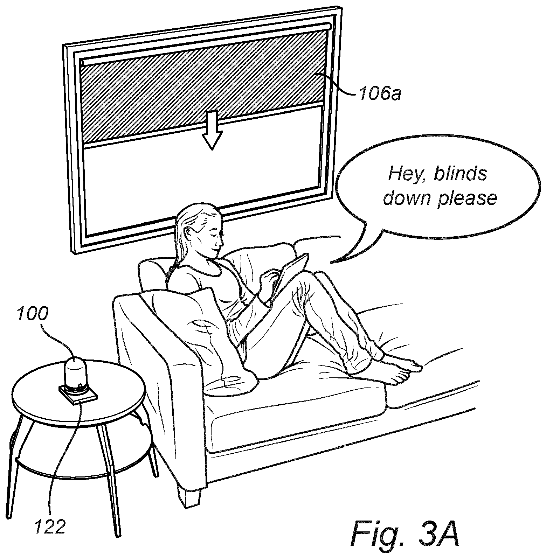

Fig. 3A illustrates a first example of use of the control device 100. In this first example, the control device 100 is embodied as a loudspeaker and is placed on the external power supply 122, which is embodied as the charging mat embedded in a side table. In this example, the user sitting in an armchair is instructing the control device 100 to lower the blinds 106a, which is to be seen as an example of one of the external units 106a. Since the control device 100 is placed on the charging mat 122, the control device is in the external power supply mode 124 and as an effect in the second operation mode 114, which means that e.g. no activation word is required for activating the speech recognition.

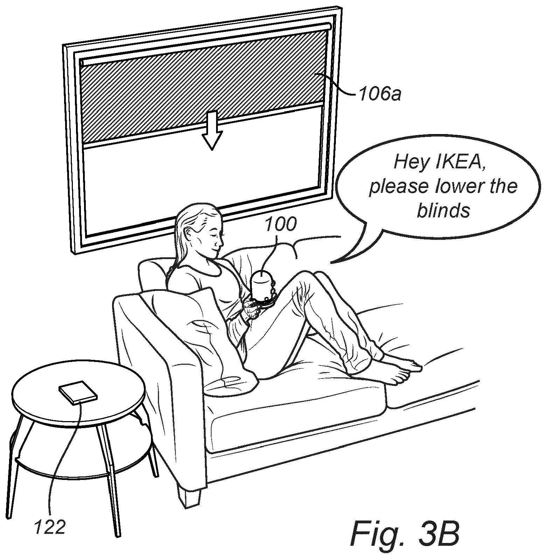

Fig 3B illustrates a second example of use of the control device 100. As in the first example illustrated in fig. 3A, the user is sitting in the armchair, but unlike the first example, the control device 100 is not placed on the charging mat, but is placed in the lap of the user. By having the control device 100 placed in the lap and not on the charging mat, the control device 100 is internally powered via e.g. the battery of the control device. Put differently, in fig. 3A the control device 100 is in the external power supply mode 124 while in fig. 3B the control device 100 is in the internal power supply mode 120.

Since the control device 100 is in the internal power supply mode 120, the control device 100 is operating according to the first operation mode 112, which means that one or more control mode switch criteria should be met for changing from the first operation mode 112 to the second operation mode 114 in which the user intentions can be identified by using speech recognition. In this example, identification of the pre-set activation sound "Hey IKEA" is one of the control mode switch criteria. Thus, by saying "Hey IKEA", the user is triggering the control device 100 to switch from the first operation mode 112 to the second operation mode 114 such the user intentions can be identified. In this example, the user intentions is to lower the blinds which can be identified by the speech recognition such that the control data can be generated and transmitted to the blinds such that in turn the request of the user can be fulfilled.

In fig. 3A, the user is saying "Hey, blinds down please". Having the pre-set activation sound set to "Hey IKEA" such phrase would not trigger the switch from the first operation mode to the second operation mode when the control device is placed in the lap of the user as illustrated in fig. 3B. However, since the control device 100 is in the external power supply mode 124 in fig. 3A, no pre-set activation sound is required for activating the speech recognition and the user intentions can therefore be identified nevertheless. A reason for not having the pre-set activation sound set to only "Hey" can be to make sure that the user is well aware of when the speech recognition is activated and when not.

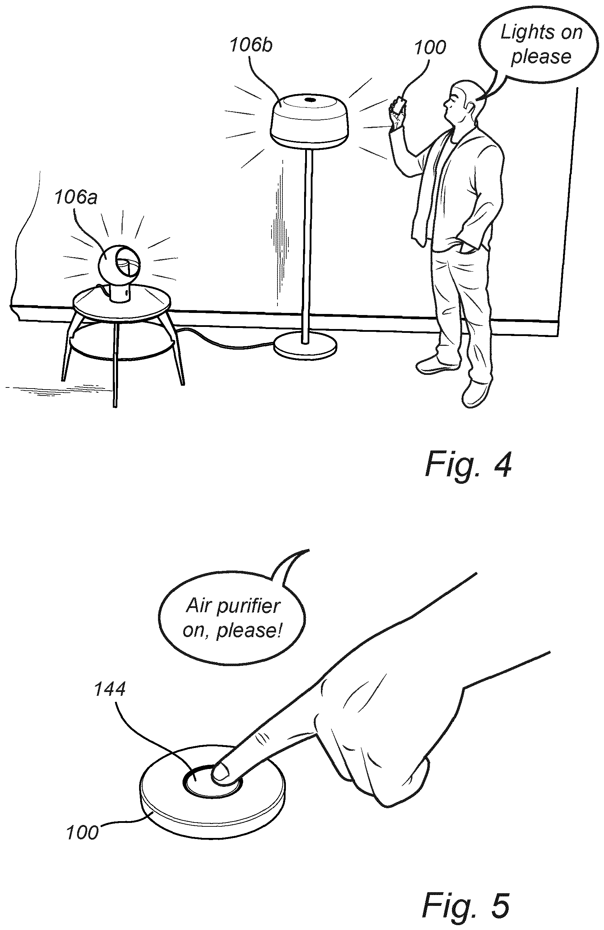

Fig. 4 illustrates a third example of use of the control device 100. In this example, the control device 100 is embodied as a device that is easy to grip for the user. The user is in this example holding the control device 100while speaking instructions to the control device 100. By holding the control device 100, the motion detector 129, the contact sensor 136 and/or the button 144 may be used for activating the speech recognition. Unlike the example illustrated in fig. 3A, the example illustrated in fig. 4 illustrates a situation when the control device 100 is in the internal power supply mode 120, and by being in this mode, the motion detector 129, the contact sensor 136 and/or the button 144 may be used for activating the speech recognition as explained above.

In this particular example the user is instructing by saying "Lights on, please". Put differently, the user is leaving out the pre-set activation sound, herein "Hey IKEA". However, the user is moving the device and thereby setting the device in the under movement mode 130. In addition, the user is holding the device and thereby setting the device in the detected user contact mode 138. Further, even though not illustrated, the button may be pushed down by the user such that the device is set in the button push mode 146. As explained above, the one or more control mode switch criteria does not necessarily have to require identification of the pre-set activation sound to trigger the switch from the first operation mode 112 to the second operation mode 114. In this particular example, the combination of the under movement mode 130, the detected user contact mode 138 and the button push mode 146 together form the one or more control switch criteria. However, as stated above, each of these may also in itself form the one or more control switch criteria.

Fig. 5 illustrates a fourth example in which the control device 100 is used. In this example, the control device 100 is puck-shaped and provided with the button 144 on a top surface. By pushing the button 144 and thereafter speaking the instructions, the user can benefit from the advantages of a smart loudspeaker without loosing control of the personal integrity.

From the description above follows that, although various embodiments of the invention have been described and shown, the invention is not restricted thereto, but may also be embodied in other ways within the scope of the subject-matter defined in the following claims.

The device and methods disclosed hereinabove may be implemented as software, firmware, hardware or a combination thereof. In a hardware implementation, the division of tasks between functional units referred to in the above description does not necessarily correspond to the division into physical units; to the contrary, one physical component may have multiple functionalities, and one task may be carried out by several physical components in cooperation. Certain components or all components may be implemented as software executed by a digital signal processor or microprocessor, or be implemented as hardware or as an application-specific integrated circuit. Such software may be distributed on computer readable media, which may comprise computer storage media (or non-transitory media) and communication media (or transitory media). As is well known to a person skilled in the art, the term computer storage media includes both volatile and nonvolatile, removable, and non-removable media implemented in any method or technology for storage of information such as computer readable instructions, data structures, program modules or other data. Computer storage media includes, but is not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other medium which can be used to store the desired information and which can be accessed by a computer. Further, it is well known to the skilled person that communication media typically embodies computer readable instructions, data structures, program modules or other data in a modulated data signal such as a carrier wave or other transport mechanism and includes any information delivery media.

## Claims

1. A control device (100) comprising
an audio data receiver (102) configured to receive audio input data,
a data communications module (104) configured to communicate with external and/or internal units (106a, 106b),
a controller (108) comprising:
an audio data processing module (110) configured to process the audio input data according to a first operation mode (112) or a second operation mode (114), wherein the first operation mode (112) comprises identification of a pre-set activation sound in the audio input data, and the second operation mode (114) comprises speech recognition for identifying, in the audio input data, user intentions for generating control data for controlling one or more of the external and/or internal units (106a, 106b),
a power supply control module (116) configured to power the control device (100) via a battery (118) in an internal power supply mode (120) or via an external power source (122) in an external power supply mode (124),
a main module (128) configured:
to determine if the power supply control device (116) is set in the internal power supply mode (120) or the external power supply mode (124),
to instruct the audio processing module (110) to operate in the first operation mode (112) if the power supply control device (116) is set in the internal power supply mode (120), or in the second operation mode (114) if the power supply control device (116) is set in the external power supply mode (124),
when the control device (100) is in the first operation mode (112), if one or more control mode switch criteria are met, to instruct the audio processing module (110) to change to the second operation mode (114), wherein the one or more control mode switch criteria comprises that the pre-set activation sound is identified in the input audio data.

2. The control device (100) according to claim 1, wherein the external power source (122) is a charging mat arranged to power the control device (100) via wireless power transmission.

3. The control device (100) according to any one of the preceding claims, wherein the pre-set activation sound is a pre-set activation word.

4. The voice control device (100) according to any one of the preceding claims, further comprising
a motion detector (129) arranged to detect if the control device (100) is in an under movement mode (130) or in a standing still mode (132),
wherein the main module (128) is further configured to, when the control device (100) is in the first operation mode (112):
to identify a movement mode (134) of the control device (100), wherein the movement mode (134) is the under movement mode (130) or the standing still mode (132),
wherein the one or more control mode switch criteria comprises that the under movement mode (130) is identified.

5. The control device (100) according to any one of the preceding claims, further comprising
a contact sensor (136) arranged to detect that if a hand of a user is placed on the control device (100),
wherein the main module (128) is further configured to, when the control device (100) is in the first operation mode (112):
to identify a user contact mode (142) of the voice control device (100), wherein the user contact mode (142) is a detected user contact mode (138) or a non-detected user contact mode (140),
wherein the one or more control mode switch criteria comprises that the detected user contact mode (138) is identified.

6. The control device (100) according to any one of the preceding claims, further comprising
a button (142) arranged on the control device (),
wherein the main module (128) is further configured, when the voice control device (100) is in the first operation mode (112):
to identify a button mode (150) of the voice control device (100), wherein the button mode (150) is a button push mode (146) or a non-button push mode (148), and
wherein the one or more control mode switch criteria comprises that the button push mode (150) is identified.

7. The control device (100) according to any one of the preceding claims, further comprising two different types of microphones:
a first type microphone (152) configured to identify the pre-set activation sound when the control device (100) is set in the first operation mode (112), and
a second type microphone (154a, 154b, 154c) configured to be in an inactivated mode when the control device (100) is set in the first operation mode (112) and in an activated mode when the control device is set in the second operational mode (114),
wherein the first type microphone (152) in combination with the second type microphone (154a, 154b, 154c) in the activated mode are used for the speech recognition in the second operation mode (114).

8. The control device (100) according to any one of the preceding claims, wherein the audio processing module (110) is further configured, when the control device (100) is in the second operation mode (114), to generate control data to a speaker to provide speech feedback based on the identified user intentions and:
to identify a user type based on a combination of sentiment and voice effort in the audio input data, wherein the sentiment is a combination of voice amplitude, voice frequency and/or words used, and the voice effort is a combination of voice amplitude and/or voice frequency,
to adapt the control data to the speaker such that the speech feedback is adapted in terms of voice amplitude, voice frequency and/or words used based on the user type identified.

9. The control device (100) according to any one of the preceding claims, wherein the speech recognition of the second operation mode (114) is limited to words and/or expressions in the field of home environment control, such as light control, blind control, sound control and air purifier control.

10. A method (200) for determining control data in a control device (100), said method comprising
receiving (202) audio input data,
determining (204) if the voice control device (100) is in an external power supply mode (124) or in an internal power supply mode (120),
if the voice control device is in the external power supply mode (124),
identifying user intentions by processing (206) the audio input data using speech recognition according to a second operation mode (114), and
if the user intentions are identified,
determining (208) the control data based on the user intentions identified,
if the voice control device (100) is in the internal power supply mode (120),
scanning (210) for a pre-set activation sound in the audio input data according to a first operation mode (112),
if the activation sound is identified,
identifying (206) user intentions by processing the audio input data using the speech recognition according to the second operation mode (114),
if the user intentions are identified,
determining (208) the control data based on the user intentions identified.

11. The method according to claim 10, further comprising
scanning (212) for a movement of the control device if the control device is in the internal power supply mode (120) by using a motion detector (129) in the control device,
wherein the step of identifying user intentions by processing the audio input data using speech recognition is performed if the control device (100) is in an under movement mode (130).

12. The method according to claim 10 or 11, further comprising
scanning (214) for a detected user contact by using a contact sensor (136) in the control device (100),
wherein the step of identifying user intentions by processing (206) the audio input data using speech recognition is performed if the control device (100) is in a detected user contact mode (138).

13. The method according to any one of claims 10 to 12, further comprising
scanning (216) for a button push by using a button (144) in the control device,
wherein the step of identifying user intentions by processing (206) the audio input data using speech recognition is performed if the control device (100) is in a button push mode (144).

14. The method according to any one of claims 10 to 13, wherein the speech recognition of the second operation mode (114) is limited to words and/or expressions in the field of home environment control, such as light control, blind control, sound control and air purifier control.

15. A non-transitory computer-readable storage medium having stored thereon program code portions for implementing the method according to any one of claims 10 to 14 when executed on a device having processing capabilities.
